(19) **Europäisches Patentamt / European Patent Office / Office européen des brevets**

(11) **EP 4 650 243 A1**

(12) **EUROPEAN PATENT APPLICATION**
published in accordance with Art. 153(4) EPC

(43) Date of publication:
19.11.2025 Bulletin 2025/47

(21) Application number: 23915655.7

(22) Date of filing: 23.10.2023

(51) International Patent Classification (IPC):
$B60W\ 50/14^{(2020.01)}$    $B60W\ 60/00^{(2020.01)}$
$B60W\ 40/109^{(2012.01)}$

(52) Cooperative Patent Classification (CPC):
B60W 40/072; B60W 40/105; B60W 40/109;
B60W 50/14; B60W 60/00

(86) International application number:
PCT/CN2023/125838

(87) International publication number:
WO 2024/148897 (18.07.2024 Gazette 2024/29)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 13.01.2023 CN 202310073720

(71) Applicant: Shenzhen Yinwang Intelligent
Technologies Co., Ltd.
Shenzhen, Guangdong 518110 (CN)

(72) Inventors:
• ZHANG, Zeyu
  Shenzhen, Guangdong 518129 (CN)

• LUO, Qi
  Shenzhen, Guangdong 518129 (CN)
• WANG, Xinyu
  Shenzhen, Guangdong 518129 (CN)
• CHEN, Yongshang
  Shenzhen, Guangdong 518129 (CN)
• CAI, Hengyi
  Shenzhen, Guangdong 518129 (CN)

(74) Representative: Maiwald GmbH
Engineering
Elisenhof
Elisenstrasse 3
80335 München (DE)

(54) **CONTROL METHOD AND APPARATUS, AND INTELLIGENT DRIVING DEVICE**

(57)    A control method and apparatus, and an intelligent driving device are provided. The method includes: when the intelligent driving device does not meet an autonomous driving condition and actively exits lateral control of autonomous driving due to a non-driver factor, adding a lateral control degraded state, and obtaining a real-time operating parameter and traveling road information of the intelligent driving device; and controlling a steering wheel of the intelligent driving device based on at least the real-time operating parameter and the traveling road information. The control method in this application may be applied to the intelligent driving device like a new energy vehicle or an electric vehicle. When the intelligent driving device exits lateral control of autonomous driving, a differentiated solution in which a torque is slowly decreased is designed, the steering wheel is controlled to slowly return to center by slowly decreasing the torque, and a control right of the intelligent driving device is gradually returned to a driver, to prevent the intelligent driving device from rushing out of a lane because the steering wheel uncontrollably returns to center when the driver does not have time to take over. This helps improve safety and reliability of the intelligent driving device.

300

S301: When an intelligent driving device exits lateral control of autonomous driving, obtain a real-time operating parameter and traveling road information of the intelligent driving device

S302: Control a steering wheel of the intelligent driving device based on at least the real-time operating parameter and the traveling road information

FIG. 3

EP 4 650 243 A1

## Description

This application claims priority to Chinese Patent Application No. 202310073720.X, filed with the China National Intellectual Property Administration on January 13, 2023 and entitled "CONTROL METHOD AND APPARATUS, AND INTELLIGENT DRIVING DEVICE", which is incorporated herein by reference in its entirety.

## TECHNICAL FIELD

This application relates to the field of intelligent driving, and more specifically, to a control method and apparatus, and an intelligent driving device.

## BACKGROUND

As the automobile industry rapidly develops, many assisted driving technologies and autonomous driving technologies are generated, so that driving pressure can be reduced, and safety and traffic efficiency can be improved. A vehicle in an autonomous driving state works through lateral control closed-loop and longitudinal control closed-loop. When an autonomous driving exit condition is triggered, the vehicle generates an alarm and directly exits or delays exiting lateral control and longitudinal control. In a current technical background, after lateral control is exited, takeover timeliness of a driver is usually not taken into full consideration, and safety and reliability indicators of the vehicle in a case in which autonomous driving is actively exited due to non-driver factors in different scenarios are not taken into full consideration. For example, in a curve scenario, when autonomous driving is actively exited due to a non-driver factor, lateral control is directly exited, a steering wheel quickly returns to center, and response time for the driver to take over the vehicle is very short, and is usually approximately 200 milliseconds to 500 milliseconds. If the driver does not take over the vehicle in a timely manner, the vehicle may rush out of a lane, which seriously threatens driving safety.

## SUMMARY

This application provides a control method and apparatus, and an intelligent driving device. When the intelligent driving device actively exits lateral control of autonomous driving due to a non-driver factor, a steering wheel may be controlled to slowly return to center. This can prevent the intelligent driving device from rushing out of a lane because the steering wheel uncontrollably returns to center when the driver does not have time to take over.

According to a first aspect, a control method is provided. The method may be performed by an intelligent driving device, or may be performed by a computing platform of an intelligent driving device, or may be performed by a chip or a circuit used in an intelligent driving device. This is not specifically limited in this application.

The intelligent driving device in this application may include a road transportation means, a water transportation means, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving device may be a transportation means like an airplane or a ship.

The method includes: when the intelligent driving device exits lateral control of autonomous driving, obtaining a real-time operating parameter and traveling road information of the intelligent driving device; and controlling a steering wheel of the intelligent driving device based on at least the real-time operating parameter and the traveling road information.

In the foregoing technical solution, when the intelligent driving device exits lateral control of autonomous driving, the steering wheel may be controlled to slowly return to center, and a control right of the intelligent driving device is gradually returned to a driver, to prevent the intelligent driving device from rushing out of a lane because the steering wheel uncontrollably returns to center when the driver does not have time to take over. This helps improve safety and reliability of the intelligent driving device.

For example, the real-time operating parameter may include a real-time speed of the intelligent driving device, and the traveling road information may include a curvature of a road on which the intelligent driving device currently travels.

With reference to the first aspect, in some implementations of the first aspect, the real-time operating parameter includes the real-time speed of the intelligent driving device and torque information of the steering wheel, and the traveling road information indicates a curvature of a road on which the intelligent driving device travels. The controlling a steering wheel of the intelligent driving device based on the real-time operating parameter and the traveling road information includes: determining a torque slow-release coefficient and a torque slow-release time parameter based on the real-time speed and the curvature of the road on which the intelligent driving device travels, where the torque slow-release coefficient is associated with a start torque of the steering wheel, and the torque slow-release time parameter is associated with duration required for decreasing a torque of the steering wheel to a preset torque threshold; determining a slow-release torque based on the torque information, the torque slow-release coefficient, and the torque slow-release time parameter; and controlling the steering wheel based on the slow-release torque.

For example, a higher speed of the intelligent driving device indicates a smaller start torque of the steering wheel associated with the torque slow-release coefficient and shorter duration required for decreasing the torque of the steering wheel associated with the torque slow-release time parameter to the preset torque threshold. A larger curvature of the road on which the intelligent driving device travels indicates a larger start torque of the steering wheel associated with the torque slow-release coefficient and longer duration required for decreasing the torque of the steering wheel associated with the torque slow-release time parameter to the preset torque threshold.

For example, the preset torque threshold may be 0, or may be another value.

In the foregoing technical solution, in different driving scenarios, the steering wheel may be controlled to return to center at different speeds and/or within different duration, to improve adaptability of the control method to the driving scenario and intelligence of the intelligent driving device. This helps improve safety of the intelligent driving device in different scenarios.

With reference to the first aspect, in some implementations of the first aspect, the method further includes: obtaining first steering angle information of the steering wheel. The determining a slow-release torque based on the torque information, the torque slow-release coefficient, and the torque slow-release time parameter includes: determining the slow-release torque based on the first steering angle information, the torque information, the torque slow-release coefficient, and the torque slow-release time parameter.

For example, a torque decrease gradient is determined based on the torque information, the torque slow-release coefficient, and the torque slow-release time parameter; and the slow-release torque is determined based on the torque decrease gradient and the start torque of the steering wheel.

Further, the torque decrease gradient is adjusted based on the first steering angle information. For example, when a change rate of a steering angle of the steering wheel is large, the torque decrease gradient is decreased, that is, a decrease speed of the slow-release torque is decreased. When the change rate of the steering angle of the steering wheel is small, the torque decrease gradient is increased, that is, the decrease speed of the slow-release torque is increased.

In the foregoing technical solution, in a process of controlling rotation of the steering wheel, steering angle information of the steering wheel is used as a negative feedback of the slow-release torque. This helps improve smoothness of slow-release of the torque in a steering wheel return process.

With reference to the first aspect, in some implementations of the first aspect, the determining a torque slow-release coefficient and a torque slow-release time parameter based on the real-time speed and the curvature of the road on which the intelligent driving device travels includes: when the real-time speed is within a first preset interval and the curvature of the road on which the intelligent driving device travels is a first curvature, determining that the torque slow-release coefficient is a first coefficient, and that the torque slow-release time parameter is a first time parameter; or when the real-time speed is within a second preset interval and the curvature of the road on which the intelligent driving device travels is the first curvature, determining that the torque slow-release coefficient is a second coefficient, and that the torque slow-release time parameter is a second time parameter. A largest value within the first preset interval is less than or equal to a smallest value within the second preset interval, a start torque corresponding to the first coefficient is greater than a start torque corresponding to the second coefficient, and duration required for decreasing a torque corresponding to the first time parameter to the preset torque threshold is greater than duration required for decreasing a torque corresponding to the second time parameter to the preset torque threshold.

With reference to the first aspect, in some implementations of the first aspect, the determining a torque slow-release coefficient and a torque slow-release time parameter based on the real-time speed and the curvature of the road on which the intelligent driving device travels includes: when the real-time speed is within a third preset interval and the curvature of the road on which the intelligent driving device travels is a second curvature, determining that the torque slow-release coefficient is a third coefficient, and that the torque slow-release time parameter is a third time parameter; or when the real-time speed is within the third preset interval and the curvature of the road on which the intelligent driving device travels is a third curvature, determining that the torque slow-release coefficient is a fourth coefficient, and that the torque slow-release time parameter is a fourth time parameter. The second curvature is less than the third curvature, a start torque corresponding to the third coefficient is less than a start torque corresponding to the fourth coefficient, and duration required for decreasing a torque corresponding to the third time parameter to the preset torque threshold is less than duration required for decreasing a torque corresponding to the fourth time parameter to the preset torque threshold.

With reference to the first aspect, in some implementations of the first aspect, the controlling a steering wheel of the intelligent driving device includes: controlling the steering wheel in a torque control mode.

In the foregoing technical solution, when exiting lateral control of autonomous driving, the intelligent driving device controls, in the torque control mode, the steering wheel to rotate, so that when taking over the intelligent driving device, the driver can quickly switch to performing lateral control on the intelligent driving device based on control of the driver. This helps the driver take over the intelligent driving device.

With reference to the first aspect, in some implementations of the first aspect, the method further includes: obtaining second steering angle information of the steering wheel when an operation of taking over the intelligent driving device by the driver is detected; and performing lateral control on the intelligent driving device based on the second steering angle information.

For example, when it is detected that the torque of the steering wheel is greater than or equal to the preset torque threshold and duration is greater than or equal to a preset duration threshold, it is determined that the driver takes over the intelligent driving device.

For example, the preset torque threshold may be 2.4 Newton·meter (N·m), or may be another value. The preset duration threshold may be 0.5 second, or may be another value.

In the foregoing technical solution, after the driver takes over the intelligent driving device, the control right of the steering wheel may be returned to the driver.

According to a second aspect, a control apparatus is provided. The apparatus includes an obtaining unit and a processing unit. The obtaining unit is configured to: when an intelligent driving device exits lateral control of autonomous driving, obtain a real-time operating parameter and traveling road information of the intelligent driving device. The processing unit is configured to control a steering wheel of the intelligent driving device based on at least the real-time operating parameter and the traveling road information.

With reference to the second aspect, in some implementations of the second aspect, the real-time operating parameter includes a real-time speed of the intelligent driving device and torque information of the steering wheel, and the traveling road information indicates a curvature of a road on which the intelligent driving device travels. The processing unit is configured to: determine a torque slow-release coefficient and a torque slow-release time parameter based on the real-time speed and the curvature of the road on which the intelligent driving device travels, where the torque slow-release coefficient is associated with a start torque of the steering wheel, and the torque slow-release time parameter is associated with duration required for decreasing a torque of the steering wheel to a preset torque threshold; determine a slow-release torque based on the torque information, the torque slow-release coefficient, and the torque slow-release time parameter; and control the steering wheel based on the slow-release torque.

With reference to the second aspect, in some implementations of the second aspect, the obtaining unit is further configured to obtain first steering angle information of the steering wheel. The processing unit is configured to determine a slow-release torque based on the first steering angle information, the torque information, the torque slow-release coefficient, and the torque slow-release time parameter.

With reference to the second aspect, in some implementations of the second aspect, the processing unit is configured to: when the real-time speed is within a first preset interval and the curvature of the road on which the intelligent driving device travels is a first curvature, determine that the torque slow-release coefficient is a first coefficient, and that the torque slow-release time parameter is a first time parameter; or when the real-time speed is within a second preset interval and the curvature of the road on which the intelligent driving device travels is the first curvature, determine that the torque slow-release coefficient is a second coefficient, and that the torque slow-release time parameter is a second time parameter. A largest value within the first preset interval is less than or equal to a smallest value within the second preset interval, a start torque corresponding to the first coefficient is greater than a start torque corresponding to the second coefficient, and duration required for decreasing a torque corresponding to the first time parameter to the preset torque threshold is greater than duration required for decreasing a torque corresponding to the second time parameter to the preset torque threshold.

With reference to the second aspect, in some implementations of the second aspect, the processing unit is configured to: when the real-time speed is within a third preset interval and the curvature of the road on which the intelligent driving device travels is a second curvature, determine that the torque slow-release coefficient is a third coefficient, and that the torque slow-release time parameter is a third time parameter; or when the real-time speed is within the third preset interval and the curvature of the road on which the intelligent driving device travels is a third curvature, determine that the torque slow-release coefficient is a fourth coefficient, and that the torque slow-release time parameter is a fourth time parameter. The second curvature is less than the third curvature, a start torque corresponding to the third coefficient is less than a start torque corresponding to the fourth coefficient, and duration required for decreasing a torque corresponding to the third time parameter to the preset torque threshold is less than duration required for decreasing a torque corresponding to the fourth time parameter to the preset torque threshold.

With reference to the second aspect, in some implementations of the second aspect, the processing unit is configured to control the steering wheel in a torque control mode.

With reference to the second aspect, in some implementations of the second aspect, the obtaining unit is further configured to obtain second steering angle information of the steering wheel when an operation of taking over the intelligent driving device by a driver is detected. The processing unit is further configured to perform lateral control on the intelligent driving device based on the second steering angle information.

According to a third aspect, a control apparatus is provided, where the apparatus includes: a memory, configured to store a computer program; and a processor, configured to execute the computer program stored in the memory, for the apparatus to perform the method in any possible implementation of the first aspect.

According to a fourth aspect, an intelligent driving device is provided. The intelligent driving device includes the apparatus according to any one of the possible implementations of the second aspect or any one of the possible implementations of the third aspect.

With reference to the fourth aspect, in some implementations of the fourth aspect, the intelligent driving device is a vehicle.

According to a fifth aspect, a computer program product is provided. The computer program product includes computer program code, and when the computer program code is run on a computer, the computer is enabled to perform the method according to any one of the possible implementations of the first aspect.

It should be noted that all or some of the computer program code may be stored in a first storage medium. The first storage medium may be encapsulated together with a processor, or may be encapsulated separately from a processor.

According to a sixth aspect, a computer-readable medium is provided. The computer-readable medium stores instructions, and when the instructions are executed by a processor, the processor is enabled to implement the method according to any one of the possible implementations of the first aspect.

According to a seventh aspect, a chip is provided. The chip includes a circuit, and the circuit is configured to perform the method according to any one of the possible implementations of the first aspect.

## BRIEF DESCRIPTION OF DRAWINGS

FIG. 1 is a functional block diagram of an intelligent driving device according to an embodiment of this application;

FIG. 2 is a diagram of a system architecture required for implementing a control method according to an embodiment of this application;

FIG. 3 is a schematic flowchart of a control method according to an embodiment of this application;

FIG. 4 is a schematic flowchart of a control method according to an embodiment of this application;

FIG. 5 is a diagram of a driving scenario according to an embodiment of this application;

FIG. 6 is a block diagram of a control apparatus according to an embodiment of this application; and

FIG. 7 is a block diagram of a control apparatus according to an embodiment of this application.

## DESCRIPTION OF EMBODIMENTS

In descriptions of embodiments of this application, unless otherwise specified, "/" indicates "or". For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, at least one means one or more, and a plurality of means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different described objects, and impose no limitation on locations, sequences, priorities, quantities, content, or the like of the described objects. In embodiments of this application, use of the prefix words, for example, an ordinal number, used to distinguish between the described objects does not constitute a limitation on the described objects. For descriptions of the described objects, refer to the descriptions of the context in the claims or embodiments. The use of such prefix words should not constitute a redundant limitation.

As described above, when autonomous driving is actively exited due to a non-driver factor, lateral control directly exits, and a steering wheel quickly returns to center. Response time for a driver to take over a vehicle is very short, and is usually approximately 200 milliseconds to 500 milliseconds. If the driver does not take over the vehicle in a timely manner, the vehicle may rush out of a lane, which seriously threatens driving safety.

In view of this, embodiments of this application provide a control method and apparatus, and an intelligent driving device. When autonomous driving is actively exited due to a non-driver factor, a control mode of an electric power steering (electric power steering, EPS) system is switched from a steering angle control mode to a torque control mode. In addition, a torque decrease gradient and duration are controlled based on a real-time operating parameter of a vehicle and information about an ambient environment of the vehicle. When it is detected that a driver takes over the vehicle, a control right of the vehicle is returned to the driver. This helps improve safety and reliability of the vehicle when autonomous driving is actively exited due to the non-driver factor.

The following describes the technical solutions of embodiments in this application with reference to accompanying drawings.

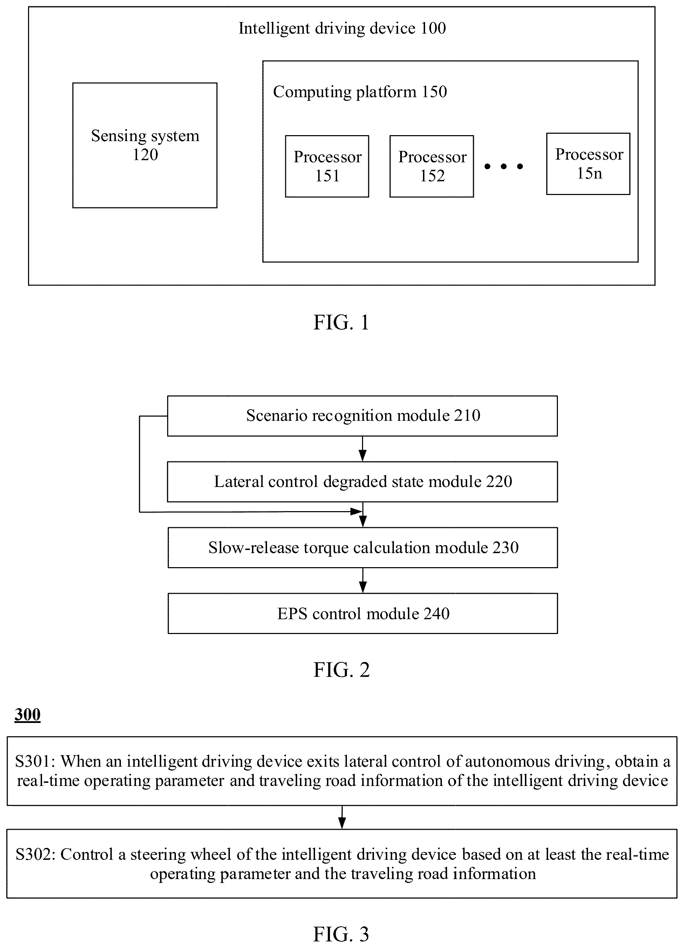

FIG. 1 is a functional block diagram of an intelligent driving device 100 according to an embodiment of this application. The intelligent driving device 100 may include a sensing system 120 and a computing platform 150. The sensing system 120 may include one or more sensors that sense information about an ambient environment of the intelligent driving device 100. For example, the sensing system 120 may include a positioning system, and the positioning system may be a global positioning system (global positioning system, GPS), or may be a BeiDou system or another positioning system, or an inertial measurement unit (inertial measurement unit, IMU). For another example, the sensing system 120 may further include one or more of a lidar, a millimeter-wave radar, an ultrasonic radar, and a camera apparatus.

Some or all functions of the intelligent driving device 100 may be controlled by the computing platform 150. The computing platform 150 may include one or more processors, for example, processors 151 to 15n (where n is a positive integer). The processor is a circuit having an instruction processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

The intelligent driving device 100 may include an advanced driving assistance system (advanced driving assistance system, ADAS). The ADAS obtains information around the intelligent driving device by using a plurality of sensors (including but not limited to a lidar, a millimeter-wave radar, a camera apparatus, an ultrasonic sensor, a global positioning system, and an inertial measurement unit) on the intelligent driving device, and analyzes and processes the obtained information, to implement functions such as obstacle sensing, target recognition, intelligent driving device positioning, path planning, and user monitoring/reminding, so as to improve driving safety, automation, and comfort of the intelligent driving device.

In terms of logical functions, the ADAS system generally includes three main functional modules: a sensing module, a decision module, and an execution module. The sensing module senses an ambient environment of a vehicle body by using a sensor, and inputs corresponding real-time data to a decision layer processing center. The sensing module mainly includes a vehicle-mounted camera, an ultrasonic radar, a millimeter-wave radar, a lidar, and the like. Based on information obtained by the sensing module, the decision module makes a corresponding decision by using a computing apparatus and an algorithm. After receiving a decision instruction from the decision module, the execution module takes a corresponding action, for example, driving, performing lane change, steering, braking, or warning.

At different autonomous driving levels (L0 to L5), the ADAS may implement different levels of autonomous driving assistance based on information obtained by using an artificial intelligence algorithm and a plurality of sensors. The foregoing autonomous driving levels (L0 to L5) are based on a grading standard of the society of automotive engineers (society of automotive engineers, SAE). The level L0 indicates no automation, a level L1 indicates driving assistance, a level L2 indicates partial automation, a level L3 indicates conditional automation, a level L4 indicates high automation, and the level L5 indicates full automation. Tasks that are of monitoring and responding to road conditions and that are at the levels L1 to L3 are jointly completed by the user and the system, and the user needs to take over a dynamic driving task. The levels L4 and L5 enable the user to be completely transformed into a passenger. Currently, functions that can be implemented by the ADAS mainly include but are not limited to adaptive cruise, automatic emergency braking, automatic parking, blind spot monitoring, traffic warning/braking at front crossroads, traffic warning/braking at rear crossroads, preceding vehicle collision warning, lane departure warning, lane keeping assistance, trailing vehicle anti-collision warning, traffic sign recognition, traffic jam assistance, highway assistance, and the like. It should be understood that the foregoing functions may have specific modes at different autonomous driving levels (L0 to L5). A higher autonomous driving level indicates a more intelligent corresponding mode, and requires higher precision of a sensing algorithm and higher precision of a planning and control algorithm.

FIG. 2 is a diagram of a system architecture required for implementing a control method according to an embodiment of this application. As shown in FIG. 2, the system includes a scenario recognition module 210, a lateral control degraded state module 220, a slow-release torque calculation module 230, and an EPS control module 240. The scenario recognition module 210 may include one or more camera apparatuses or one or more radar sensors in the sensing system 120 shown in FIG. 1, and is configured to collect traveling road information of an intelligent driving device, a real-time operating parameter (for example, a driving speed, a steering angle of a steering wheel, and an EPS torque) of the intelligent driving device, and the like. The scenario recognition module 210 determines, based on the real-time operating parameter and the traveling road information of the intelligent driving device, a specific scenario in which the intelligent driving device exits autonomous driving. The lateral control degraded state module 220 may be one or more processors in the computing platform 150 shown in FIG. 1, and is configured to adjust a lateral control mode based on an autonomous driving scenario and mode. For example, when autonomous driving is actively exited due to a non-driver factor, the lateral control degraded state module 220 switches the lateral control mode from a steering angle control mode to a torque control mode. The steering angle control mode is a mode in which a steering angle is used as a control instruction of an EPS system. The torque control mode is a mode in which a steering torque is used as a control instruction of the EPS system. Further, the slow-release torque calculation module 230 and the EPS control module 240 perform slow-release torque calculation and steering wheel control based on the lateral control mode determined by the lateral control degraded state module 220. Specifically, the slow-release torque calculation module 230 may be one or more processors in the computing platform 150 shown in FIG. 1, and is configured to: determine a torque slow-release coefficient and a torque slow-release time parameter based on the real-time operating parameter and the traveling road information of the intelligent driving device, further determine a slow-release torque with reference to the EPS torque, the steering angle of the steering wheel, the torque slow-release coefficient, and the torque slow-release time parameter, and input the slow-release torque obtained through calculation into the EPS control module 240. The EPS control module 240 controls the steering wheel to return to center based on the slow-release torque.

It should be understood that the foregoing modules are merely examples. In actual application, the foregoing modules may be added or deleted based on an actual requirement. For example, in the system architecture shown in FIG. 2, the slow-release torque calculation module 230 and the EPS control module 240 may be combined into one module.

FIG. 3 is a schematic flowchart of a control method according to an embodiment of this application. The method may be applied to the intelligent driving device shown in FIG. 1, or the method may be performed by the system shown in FIG. 2. For example, the following uses an example in which the method is performed by a computing platform of an intelligent driving device for description. A method 300 may include the following steps.

S301: When the intelligent driving device exits lateral control of autonomous driving, obtain a real-time operating parameter and traveling road information of the intelligent driving device.

For example, the real-time operating parameter may include the real-time operating parameter in the foregoing embodiment, for example, may include a real-time speed and a steering wheel torque of the intelligent driving device.

For example, the traveling road information may be an image of a traveling road, or may be laser point cloud data of a traveling road, or may be high-precision map information of a traveling road, or may be other information. A curvature of a road on which the intelligent driving device currently travels may be determined based on the traveling road information.

In some possible implementations, the intelligent driving device actively exits lateral control of autonomous driving due to a non-driver factor. For example, before the intelligent driving device exits lateral control of autonomous driving, the intelligent driving device enables an autonomous driving function, for example, an intelligent driving navigation cruise assistant (navigation cruise assistant, NCA) function or an integrated cruise assistant (integrated cruise assistant, ICA) function. Further, in a traveling process of the intelligent driving device, the NCA or ICA function is exited due to a non-driver factor. In this case, the intelligent driving device may enable an adaptive cruise control (adaptive cruise control, ACC) function, or the autonomous driving function may be completely disabled.

It should be understood that there is no lateral control interface for ACC, and a full-speed steering angle interface is used for lateral control of ICA/NCA.

S302: Control a steering wheel of the intelligent driving device based on the real-time operating parameter and the traveling road information.

In some possible implementations, the real-time operating parameter includes the real-time speed of the intelligent driving device and torque information of the steering wheel. In this case, a torque slow-release coefficient and a torque slow-release time parameter are determined based on the real-time speed and the traveling road information of the intelligent driving device, where the torque slow-release coefficient is associated with a start torque of the steering wheel, and the torque slow-release time parameter is associated with duration required for decreasing a torque of the steering wheel to a preset torque threshold. A slow-release torque is determined based on the torque information, the torque slow-release coefficient, and the torque slow-release time parameter. The steering wheel is controlled based on the slow-release torque.

For example, the preset torque threshold may be 0, or may be another value.

For example, if the torque information is a current steering wheel torque fed back by an EPS system, a basic slow-release torque may be determined based on the current steering wheel torque and the torque slow-release coefficient:

$$epsMoterTorqSave1=epsMoterTorq*epsTransParamTq*epsTransParam \quad (1)$$

Herein, epsMoterTorqSave1 is the basic slow-release torque, epsTransParam is a fixed parameter, epsMoterTorq is the current steering wheel torque, and epsTransParamTq is the torque slow-release coefficient.

For example, epsTransParam may be 0.3, or may be 0.25.

The basic slow-release torque may be understood as the start torque for controlling the steering wheel when the intelligent driving device exits lateral control of autonomous driving. Larger epsTransParamTq indicates a larger basic slow-release torque.

Then, a torque decrease gradient is determined based on the basic slow-release torque and the torque slow-release time parameter:

$$epsGradient=epsMoterTorqSave1/epsHoldTime \quad (2)$$

Herein, epsGradient is the torque decrease gradient, and epsHoldTime is the torque slow-release time parameter.

Further, the slow-release torque is determined based on the basic slow-release torque and the torque decrease gradient. The slow-release torque may be a steering torque instruction input into the EPS control module 240, to control the torque of the steering wheel to be changed to the slow-release torque:

$$epsMoterTorqSave2=epsMoterTorqSave1-epsGradient*dt \quad (3)$$

Herein, epsMoterTorqSave2 is the slow-release torque, and dt is a time interval for inputting an instruction into the EPS control module 240.

Further, a value of epsMoterTorqSave2 is assigned to epsMoterTorqSave1, and formula (2) and formula (3) are repeatedly executed, to control the torque of the steering wheel to gradually decrease.

For example, the torque slow-release coefficient may be any value from 1.0 to 2.5, and a smaller value indicates a smaller corresponding basic slow-release torque. The torque slow-release time parameter may be any value from 1.0 to 2.0, and a smaller value indicates shorter duration required for decreasing a corresponding torque to 0. It should be understood that the torque slow-release coefficient and the torque slow-release time parameter may alternatively be other values. It may be understood that the torque slow-release coefficient and the torque slow-release time parameter jointly determine the torque decrease gradient.

For example, when the real-time speed of the intelligent driving device is within a first preset interval, for example, 0 to 40 kilometers per hour (kilometers per hour, kph) shown in Table 1 and the curvature of the road on which the intelligent driving device travels is a first curvature (for example, road curvature>0.01), it is determined that the torque slow-release coefficient is a first coefficient, and that the torque slow-release time parameter is a first time parameter. Alternatively, when the real-time speed of the intelligent driving device is within a second preset interval, for example, 41 to 70 kph shown in Table 1 and the curvature of the road on which the intelligent driving device travels is the first curvature, it is determined that the torque slow-release coefficient is a second coefficient, and that the torque slow-release time parameter is a second time parameter. When a largest value within the first preset interval is less than or equal to a smallest value within the second preset interval, a start torque corresponding to the first coefficient is greater than a start torque corresponding to the second coefficient, and duration required for decreasing a torque corresponding to the first time parameter to the preset torque threshold is greater than duration required for decreasing a torque corresponding to the second time parameter to the preset torque threshold. For example, a relationship between the torque slow-release coefficient and the torque slow-release time parameter, and the road curvature and the real-time speed is shown in Table 1.

**Table 1 Example of the torque slow-release coefficient and the torque slow-release time parameter**

| Real-time speed (kph) | Road curvature | Torque slow-release coefficient | Torque slow-release time parameter |
|---|---|---|---|
| 0 to 40 | >0.01 | 2.5 | 2.0 |
| 41 to 70 | >0.01 | 2.0 | 1.5 |
| 71 to 90 | >0.01 | 1.5 | 1.2 |
| Above 90 | >0.01 | 1.0 | 1.0 |

For example, when the real-time speed of the intelligent driving device is within a third preset interval (for example, 0 to 40 kph shown in Table 1) and the curvature of the road on which the intelligent driving device travels is a

EP 4 650 243 A1

second curvature (for example, the curvature of the road is 0.004), it is determined that the torque slow-release coefficient is a third coefficient, and that the torque slow-release time parameter is a third time parameter. Alternatively, when the real-time speed of the intelligent driving device is within the third preset interval and the curvature of the road on which the intelligent driving device travels is a third curvature (for example, the curvature of the road is 0.007), it is determined that the torque slow-release coefficient is a fourth coefficient, and that the torque slow-release time parameter is a fourth time parameter. When the second curvature is less than the third curvature, a start torque corresponding to the third coefficient is less than a start torque corresponding to the fourth coefficient, and duration required for decreasing a torque corresponding to the third time parameter to the preset torque threshold is less than duration required for decreasing a torque corresponding to the fourth time parameter to the preset torque threshold. For example, a relationship between the torque slow-release coefficient and the torque slow-release time parameter, and the road curvature and the real-time speed is shown in Table 2.

**Table 2 Another example of the torque slow-release coefficient and the torque slow-release time parameter**

| Real-time speed (kph) | Road curvature | Torque slow-release coefficient | Torque slow-release time parameter |
| --- | --- | --- | --- |
| 0 to 40 | <0.005 | 2.0 | 1.7 |
| 0 to 40 | 0.005 to 0.01 | 2.25 | 1.85 |
| 0 to 40 | >0.01 | 2.5 | 2.0 |

It can be learned from Table 1 and Table 2 that, when road curvatures are consistent, a higher real-time speed of the intelligent driving device indicates that the steering wheel is faster controlled to return to center based on the slow-release torque. When real-time speeds of the driving device are consistent, a larger road curvature indicates longer time for controlling the steering wheel to return to center based on the slow-release torque.

It should be noted that the slow-release torque is calculated in real time based on an actual torque of the steering wheel. In some possible implementations, in a process of controlling the steering wheel, first steering angle information of the steering wheel is obtained. Further, the slow-release torque is determined based on the first steering angle information, the actual torque of the steering wheel, the torque slow-release coefficient, and the torque slow-release time parameter.

It may be understood that, in a process of controlling the steering wheel based on the slow-release torque, a rotation direction of the steering wheel should be monotonic. For example, when the intelligent driving device exits lateral control of autonomous driving, the steering wheel is in a state in which the steering wheel rotates 360 degrees counterclockwise. In this case, in the process of controlling the steering wheel based on the slow-release torque, the steering wheel always rotates clockwise.

Further, in the process of controlling the steering wheel, the torque decrease gradient (for example, epsGradient) may be adjusted based on the steering angle information of the steering wheel. For example, when a change rate of the steering angle of the steering wheel is large, the torque decrease gradient is decreased, that is, a decrease speed of the slow-release torque is decreased. When the change rate of the steering angle of the steering wheel is small, the torque decrease gradient is increased, that is, the decrease speed of the slow-release torque is increased.

In some possible implementations, when the intelligent driving device is in an autonomous driving state, a lateral control mode of the EPS system is a steering angle control mode. In this case, when the intelligent driving device exits lateral control of autonomous driving, the lateral control mode of the EPS system is controlled to be switched from the steering angle control mode to a torque control mode. Further, in the torque control mode, the steering wheel of the intelligent driving device is controlled to rotate.

In some possible implementations, when it is detected that a driver takes over the intelligent driving device, second steering angle information of the steering wheel is obtained. Lateral control is performed on the intelligent driving device based on the second steering angle information.

For example, when it is detected that the torque of the steering wheel is greater than or equal to the preset torque threshold and duration is greater than or equal to a preset duration threshold, it is determined that the driver takes over the intelligent driving device.

For example, the preset torque threshold may be 2.4 Newton·meter (N·m), or may be another value. The preset duration threshold may be 0.5 second, or may be another value.

According to the control method provided in this embodiment of this application, the steering wheel can be controlled to slowly return to center based on road information and a real-time parameter of the intelligent driving device in a case in which the intelligent driving device exits lateral control of autonomous driving. In different driving scenarios, the steering wheel can be controlled to return to center at different speeds and/or within different duration, to improve safety of the intelligent driving device. Further, in a process of controlling rotation of the steering wheel, steering angle information of the steering wheel is used as a negative feedback of the slow-release torque. This helps improve smoothness of slow-release of the torque in a steering wheel return process. In addition, when exiting lateral control of autonomous driving, the intelligent driving device controls, in the torque control mode, the steering wheel to rotate, so that when taking over the intelligent driving device, the driver can quickly switch to performing lateral control on the intelligent driving device based on control of the driver. This helps the driver take over the intelligent driving device.

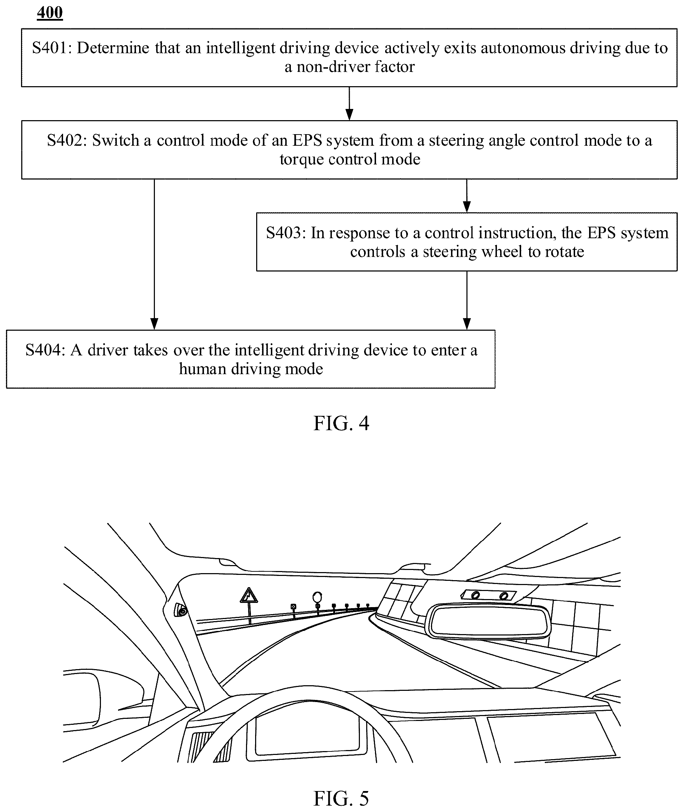

FIG. 4 is a schematic flowchart of a control method according to an embodiment of this application. The method may be applied to the intelligent driving device shown in FIG. 1, or the method may be performed by the system shown in FIG. 2. The method 400 may be understood as an extension of the method 300. The method 400 may be performed in parallel with the method 300, or may be performed after the method 300. For example, the following uses an example in which the method is performed by a computing platform of an intelligent driving device for description. The method 400 may include the following steps.

S401: Determine that the intelligent driving device actively exits lateral control of autonomous driving due to a non-driver factor.

For example, for a specific method for determining that the intelligent driving device actively exits lateral control of autonomous driving due to the non-driver factor, refer to the descriptions in S301. Details are not described herein again.

S402: Switch a control mode of an EPS system from a steering angle control mode to a torque control mode.

S403: In response to a control instruction, the EPS system controls a steering wheel to rotate.

For example, for a specific method for controlling rotation of the steering wheel, refer to the descriptions in the method 300. Details are not described herein again.

S404: The driver takes over the intelligent driving device to enter a human driving mode.

For example, after it is determined that the driver takes over the intelligent driving device, lateral control is performed on the intelligent driving device based on an actual steering angle of the steering wheel.

According to the control method provided in this embodiment of this application, a control right of the intelligent driving device is gradually returned to the driver by slowing down a torque of the steering wheel, to improve safety and reliability of the intelligent driving device in a case in which the intelligent driving device actively exits lateral control of autonomous driving due to non-driver factors in different scenarios.

According to the control methods shown in FIG. 3 and FIG. 4, in a driving scenario shown in FIG. 5, if a vehicle suddenly exits lateral control of autonomous driving, a steering wheel may slowly return to center, to give the driver sufficient reaction time to take over the vehicle, so as to prevent the vehicle from rushing out of a lane because the steering wheel quickly returns to center.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

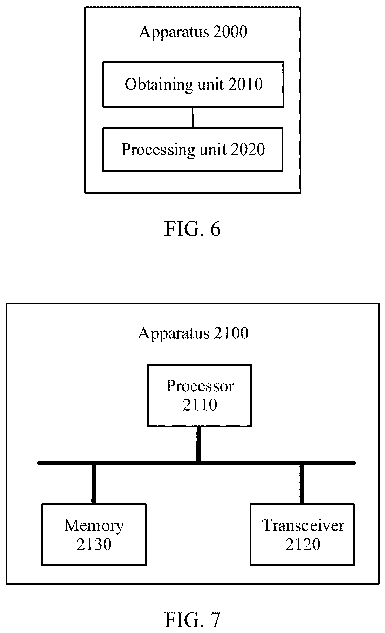

The methods provided in embodiments of this application are described above in detail with reference to FIG. 1 to FIG. 5. The following describes in detail apparatuses provided in embodiments of this application with reference to FIG. 6 and FIG. 7. It should be understood that descriptions of apparatus embodiments correspond to descriptions of method embodiment. Therefore, for content that is not described in detail, refer to the method embodiment. For brevity, details are not described herein again.

FIG. 6 is a block diagram of a control apparatus 2000 according to an embodiment of this application. The apparatus 2000 includes an obtaining unit 2010 and a processing unit 2020.

The apparatus 2000 may include units configured to perform the methods in FIG. 3 and FIG. 4. In addition, the units in the apparatus 2000 are separately used to implement corresponding procedures of the method embodiments in FIG. 3 and FIG. 4.

When the apparatus 2000 is configured to perform the method 300 in FIG. 3, the obtaining unit 2010 may be configured to perform S301 in the method 300, and the processing unit 2020 may be configured to perform S302 in the method 300.

The apparatus 2000 includes the obtaining unit 2010 and the processing unit 2020. The obtaining unit 2010 is configured to: when an intelligent driving device exits lateral control of autonomous driving, obtain a real-time operating parameter and traveling road information of the intelligent driving device. The processing unit is configured to control a steering wheel of the intelligent driving device based on at least the real-time operating parameter and the traveling road information.

Optionally, the real-time operating parameter includes a real-time speed of the intelligent driving device and torque information of the steering wheel, and the traveling road information indicates a curvature of a road on which the intelligent driving device travels. The processing unit 2020 is configured to: determine a torque slow-release coefficient and a torque slow-release time parameter based on the real-time speed and the curvature of the road on which the intelligent driving device travels, where the torque slow-release coefficient is associated with a start torque of the steering wheel, and the torque slow-release time parameter is associated with duration required for decreasing a torque of the steering wheel to a preset torque threshold; determine a slow-release torque based on the torque information, the torque slow-release coefficient, and the torque slow-release time parameter; and control the steering wheel based on the slow-release torque.

Optionally, the obtaining unit 2010 is further configured to obtain first steering angle information of the steering wheel. The processing unit is configured to determine a slow-release torque based on the first steering angle information, the torque information, the torque slow-release coefficient, and the torque slow-release time parameter.

Optionally, the processing unit 2020 is configured to: when the real-time speed is within a first preset interval and the curvature of the road on which the intelligent driving device travels is a first curvature, determine that the torque slow-release coefficient is a first coefficient, and that the torque slow-release time parameter is a first time parameter; or when the real-time speed is within a second preset interval and the curvature of the road on which the intelligent driving device travels is the first curvature, determine that the torque slow-release coefficient is a second coefficient, and that the torque slow-release time parameter is a second time parameter. A largest value within the first preset interval is less than or equal to a smallest value within the second preset interval, a start torque corresponding to the first coefficient is greater than a start torque corresponding to the second coefficient, and duration required for decreasing a torque corresponding to the first time parameter to the preset torque threshold is greater than duration required for decreasing a torque corresponding to the second time parameter to the preset torque threshold.

Optionally, the processing unit 2020 is configured to: when the real-time speed is within a third preset interval and the curvature of the road on which the intelligent driving device travels is a second curvature, determine that the torque slow-release coefficient is a third coefficient, and that the torque slow-release time parameter is a third time parameter; or when the real-time speed is within the third preset interval and the curvature of the road on which the intelligent driving device travels is a third curvature, determine that the torque slow-release coefficient is a fourth coefficient, and that the torque slow-release time parameter is a fourth time parameter. The second curvature is less than the third curvature, a start torque corresponding to the third coefficient is less than a start torque corresponding to the fourth coefficient, and duration required for decreasing a torque corresponding to the third time parameter to the preset torque threshold is less than duration required for decreasing a torque corresponding to the fourth time parameter to the preset torque threshold.

Optionally, the processing unit 2020 is configured to control the steering wheel in a torque control mode.

Optionally, the obtaining unit 2010 is further configured to obtain second steering angle information of the steering wheel when an operation of taking over the intelligent driving device by a driver is detected. The processing unit 2020 is further configured to perform lateral control on the intelligent driving device based on the second steering angle information.

For example, the obtaining unit 2010 and the processing unit 2020 may be disposed in the intelligent driving device 100 shown in FIG. 1. More specifically, the obtaining unit 2010 and the processing unit 2020 may be disposed in the computing platform 150 shown in FIG. 1. For example, the obtaining unit 2010 and the processing unit 2020 may alternatively be disposed in the system shown in FIG. 2. More specifically, the obtaining unit 2010 may be disposed in the slow-release torque calculation module 230, and the processing unit 2020 may be disposed in the EPS control module 240.

It should be understood that division into the units of the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

Each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, the units are integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

In a specific implementation process, the operations performed by the obtaining unit 2010 and the processing unit 2020 may be performed by one processor, or may be performed by different processors. In a specific implementation process, the one or more processors may be processors disposed in the computing platform 150 shown in FIG. 1, or the apparatus 2000 may be a chip disposed in the intelligent driving device 100.

FIG. 7 is a block diagram of a control apparatus according to an embodiment of this application. A control apparatus 2100 shown in FIG. 7 may include a processor 2110, a transceiver 2120, and a memory 2130. The processor 2110, the transceiver 2120, and the memory 2130 are connected by using an internal connection path. The memory 2130 is configured to store instructions. The processor 2110 is configured to execute the instructions stored in the memory 2130, to implement the control methods in the foregoing embodiments. Optionally, the memory 2130 may be coupled to the processor 2110 by using an interface, or may be integrated with the processor 2110.

The transceiver 2120 may include but is not limited to, a transceiver apparatus like an input/output interface (input/output interface), to implement communication between the apparatus 2100 and another device or a communication network.

The memory 2130 may be a read only memory (read only memory, ROM), a static storage device, a dynamic storage device, or a random access memory (random access memory, RAM).

The transceiver 2120 uses, for example, but is not limited to, a transceiver apparatus of a transceiver type, to implement communication between the apparatus 2100 and another device or a communication network, to receive/send data/information used to implement the control methods in the foregoing embodiments.

In a specific implementation process, the apparatus 2100 may be disposed in the computing platform 150 shown in FIG. 1.

An embodiment of this application further provides an intelligent driving device. The intelligent driving device includes the foregoing apparatus 2000 or the foregoing apparatus 2100.

In some possible implementations, the intelligent driving device may be a vehicle.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A control method, comprising:

   when an intelligent driving device exits lateral control of autonomous driving, obtaining a real-time operating parameter and traveling road information of the intelligent driving device; and
   controlling a steering wheel of the intelligent driving device based on at least the real-time operating parameter and the traveling road information.

2. The method according to claim 1, wherein the real-time operating parameter comprises a real-time speed of the intelligent driving device and torque information of the steering wheel, the traveling road information indicates a curvature of a road on which the intelligent driving device travels, and the controlling a steering wheel of the intelligent driving device based on at least the real-time operating parameter and the traveling road information comprises:

   determining a torque slow-release coefficient and a torque slow-release time parameter based on the real-time speed and the curvature of the road on which the intelligent driving device travels, wherein the torque slow-release coefficient is associated with a start torque of the steering wheel, and the torque slow-release time parameter is associated with duration required for decreasing a torque of the steering wheel to a preset torque threshold;
   determining a slow-release torque based on the torque information, the torque slow-release coefficient, and the torque slow-release time parameter; and
   controlling the steering wheel based on the slow-release torque.

3. The method according to claim 2, wherein the method further comprises:

   obtaining first steering angle information of the steering wheel; and
   the determining a slow-release torque based on the torque information, the torque slow-release coefficient, and the torque slow-release time parameter comprises:
   determining the slow-release torque based on the first steering angle information, the torque information, the torque slow-release coefficient, and the torque slow-release time parameter.

4. The method according to claim 2 or 3, wherein the determining a torque slow-release coefficient and a torque slow-release time parameter based on the real-time speed and the curvature of the road on which the intelligent driving device travels comprises:

   when the real-time speed is within a first preset interval and the curvature of the road on which the intelligent driving device travels is a first curvature, determining that the torque slow-release coefficient is a first coefficient, and that the torque slow-release time parameter is a first time parameter; or
   when the real-time speed is within a second preset interval and the curvature of the road on which the intelligent driving device travels is the first curvature, determining that the torque slow-release coefficient is a second coefficient, and that the torque slow-release time parameter is a second time parameter, wherein
   a largest value within the first preset interval is less than or equal to a smallest value within the second preset interval, a start torque corresponding to the first coefficient is greater than a start torque corresponding to the second coefficient, and duration required for decreasing a torque corresponding to the first time parameter to the preset torque threshold is greater than duration required for decreasing a torque corresponding to the second time parameter to the preset torque threshold.

5. The method according to claim 2 or 3, wherein the determining a torque slow-release coefficient and a torque slow-release time parameter based on the real-time speed and the curvature of the road on which the intelligent driving device travels comprises:

   when the real-time speed is within a third preset interval and the curvature of the road on which the intelligent driving device travels is a second curvature, determining that the torque slow-release coefficient is a third coefficient, and that the torque slow-release time parameter is a third time parameter; or
   when the real-time speed is within the third preset interval and the curvature of the road on which the intelligent driving device travels is a third curvature, determining that the torque slow-release coefficient is a fourth coefficient, and that the torque slow-release time parameter is a fourth time parameter, wherein
the second curvature is less than the third curvature, a start torque corresponding to the third coefficient is less than a start torque corresponding to the fourth coefficient, and duration required for decreasing a torque corresponding to the third time parameter to the preset torque threshold is less than duration required for decreasing a torque corresponding to the fourth time parameter to the preset torque threshold.

6. The method according to any one of claims 1 to 5, wherein the controlling a steering wheel of the intelligent driving device comprises:
controlling the steering wheel in a torque control mode.

7. The method according to any one of claims 1 to 6, wherein the method further comprises:

obtaining second steering angle information of the steering wheel when an operation of taking over the intelligent driving device by a driver is detected; and
performing lateral control on the intelligent driving device based on the second steering angle information.

8. A control apparatus, comprising an obtaining unit and a processing unit, wherein

the obtaining unit is configured to: when an intelligent driving device exits lateral control of autonomous driving, obtain a real-time operating parameter and traveling road information of the intelligent driving device; and
the processing unit is configured to control a steering wheel of the intelligent driving device based on at least the real-time operating parameter and the traveling road information.

9. The apparatus according to claim 8, wherein the real-time operating parameter comprises a real-time speed of the intelligent driving device and torque information of the steering wheel, the traveling road information indicates a curvature of a road on which the intelligent driving device travels, and the processing unit is configured to:

determine a torque slow-release coefficient and a torque slow-release time parameter based on the real-time speed and the curvature of the road on which the intelligent driving device travels, wherein the torque slow-release coefficient is associated with a start torque of the steering wheel, and the torque slow-release time parameter is associated with duration required for decreasing a torque of the steering wheel to a preset torque threshold;
determine a slow-release torque based on the torque information, the torque slow-release coefficient, and the torque slow-release time parameter; and
control the steering wheel based on the slow-release torque.

10. The apparatus according to claim 9, wherein the obtaining unit is further configured to:

obtain first steering angle information of the steering wheel; and
the processing unit is configured to:
determine the slow-release torque based on the first steering angle information, the torque information, the torque slow-release coefficient, and the torque slow-release time parameter.

11. The apparatus according to claim 9 or 10, wherein the processing unit is configured to:

when the real-time speed is within a first preset interval and the curvature of the road on which the intelligent driving device travels is a first curvature, determine that the torque slow-release coefficient is a first coefficient, and that the torque slow-release time parameter is a first time parameter; or
when the real-time speed is within a second preset interval and the curvature of the road on which the intelligent driving device travels is the first curvature, determine that the torque slow-release coefficient is a second coefficient, and that the torque slow-release time parameter is a second time parameter, wherein
a largest value within the first preset interval is less than or equal to a smallest value within the second preset interval, a start torque corresponding to the first coefficient is greater than a start torque corresponding to the second coefficient, and duration required for decreasing a torque corresponding to the first time parameter to the preset torque threshold is greater than duration required for decreasing a torque corresponding to the second time parameter to the preset torque threshold.

12. The apparatus according to claim 9 or 10, wherein the processing unit is configured to:

when the real-time speed is within a third preset interval and the curvature of the road on which the intelligent driving device travels is a second curvature, determine that the torque slow-release coefficient is a third coefficient, and that the torque slow-release time parameter is a third time parameter; or
when the real-time speed is within the third preset interval and the curvature of the road on which the intelligent driving device travels is a third curvature, determine that the torque slow-release coefficient is a fourth coefficient, and that the torque slow-release time parameter is a fourth time parameter, wherein
the second curvature is less than the third curvature, a start torque corresponding to the third coefficient is less than a start torque corresponding to the fourth coefficient, and duration required for decreasing a torque corresponding to the third time parameter to the preset torque threshold is less than duration required for decreasing a torque corresponding to the fourth time parameter to the preset torque threshold.

13. The apparatus according to any one of claims 8 to 12, wherein the processing unit is configured to:
control the steering wheel in a torque control mode.

14. The apparatus according to any one of claims 8 to 13, wherein the obtaining unit is further configured to:

obtain second steering angle information of the steering wheel when an operation of taking over the intelligent driving device by a driver is detected; and
the processing unit is further configured to perform lateral control on the intelligent driving device based on the second steering angle information.

15. A control apparatus, comprising:

a memory, configured to store a computer program; and
a processor, configured to execute the computer program stored in the memory, for the apparatus to perform the method according to any one of claims 1 to 7.

16. An intelligent driving device, comprising the apparatus according to any one of claims 8 to 15.

17. A computer-readable storage medium, wherein the computer-readable storage medium stores instructions, and when the instructions are executed by a processor, the processor is enabled to implement the method according to any one of claims 1 to 7.

18. A chip, wherein the chip comprises a circuit, and the circuit is configured to perform the method according to any one of claims 1 to 7.

Intelligent driving device 100

Sensing system 120

Computing platform 150

Processor 151

Processor 152

• • •

Processor 15n

FIG. 1

Scenario recognition module 210

Lateral control degraded state module 220

Slow-release torque calculation module 230

EPS control module 240

FIG. 2

300

S301: When an intelligent driving device exits lateral control of autonomous driving, obtain a real-time operating parameter and traveling road information of the intelligent driving device

S302: Control a steering wheel of the intelligent driving device based on at least the real-time operating parameter and the traveling road information

FIG. 3

**400**

S401: Determine that an intelligent driving device actively exits autonomous driving due to a non-driver factor

S402: Switch a control mode of an EPS system from a steering angle control mode to a torque control mode

S403: In response to a control instruction, the EPS system controls a steering wheel to rotate

S404: A driver takes over the intelligent driving device to enter a human driving mode

FIG. 4

FIG. 5

Apparatus 2000

Obtaining unit 2010

Processing unit 2020

FIG. 6

Apparatus 2100

Processor
2110

Memory
2130

Transceiver
2120

FIG. 7

## INTERNATIONAL SEARCH REPORT

International application No.

**PCT/CN2023/125838**

| A. | CLASSIFICATION OF SUBJECT MATTER |
|---|---|

B60W50/14(2020.01)i; B60W60/00(2020.01)i; B60W40/109(2012.01)i

According to International Patent Classification (IPC) or to both national classification and IPC

| B. | FIELDS SEARCHED |
|---|---|

Minimum documentation searched (classification system followed by classification symbols)

B60W

Documentation searched other than minimum documentation to the extent that such documents are included in the fields searched

Electronic data base consulted during the international search (name of data base and, where practicable, search terms used)

CNTXT, ENTXTC, WPABSC, CJFD, CNKI: 方向盘, 缓, 缓释, 降, 慢, 退, 退出, 退出智能驾驶, 退出自动驾驶, 智能驾驶, 转矩, 自动驾驶; streering wheel, slow, release, down, back, exit, intelligent driving, automatic driving, torque,

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114261403 A (NINGBO-AVERAGED INTELLIGENCE BANK SCIENCE AND TECHNOLOGY CO., LTD.) 01 April 2022 (2022-04-01) specific embodiments | 1, 6-8, 13-18 |
| X | CN 114248805 A (ZHONGTONG BUS HOLDING CO., LTD.) 29 March 2022 (2022-03-29) specific embodiments | 1, 6-8, 13-18 |
| PX | CN 115946721 A (AVITA TECHNOLOGY (CHONGQING) CO., LTD.) 11 April 2023 (2023-04-11) specific embodiments | 1, 6-8, 13-18 |
| A | CN 114834475 A (ZHENGZHOU YUTONG BUS CO., LTD.) 02 August 2022 (2022-08-02) entire document | 1-18 |
| A | CN 109606385 A (BAIDU ONLINE NETWORK TECHNOLOGY (BEIJING) CO., LTD.) 12 April 2019 (2019-04-12) entire document | 1-18 |
| A | CN 111762166 A (HONDA MOTOR CO., LTD.) 13 October 2020 (2020-10-13) entire document | 1-18 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 January 2024** | **22 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/125838**

**C.    DOCUMENTS CONSIDERED TO BE RELEVANT**

| Category* | Citation of document, with indication, where appropriate, of the relevant passages | Relevant to claim No. |
|---|---|---|
| A | WO 2023279285 A1 (HUAWEI TECHNOLOGIES CO., LTD.) 12 January 2023 (2023-01-12)<br>    entire document | 1-18 |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 114261403 | A | 01 April 2022 | None | | | |
| CN | 114248805 | A | 29 March 2022 | None | | | |
| CN | 115946721 | A | 11 April 2023 | None | | | |
| CN | 114834475 | A | 02 August 2022 | None | | | |
| CN | 109606385 | A | 12 April 2019 | None | | | |
| CN | 111762166 | A | 13 October 2020 | JP | 2023029541 | A | 03 March 2023 |
| | | | | JP | 2020163900 | A | 08 October 2020 |
| | | | | US | 2020307593 | A1 | 01 October 2020 |
| WO | 2023279285 | A1 | 12 January 2023 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310073720X